# EUROPEAN PATENT APPLICATION

(11) **EP 2 073 487 A1**
(43) Date of publication of application: **24.06.2009**
(21) Application number: 07291555.6
(22) Date of filing: 18.12.2007
(51) Int. Cl.: H04L 29/06

(54) **Process for an enhanced delivery of a telecommunication stream from a telecommunication device to a computer through a network**

(71) Applicant: Alcatel Lucent, 75008 Paris (FR)
(72) Inventor: Rey, Jean-François, 29200 Brest (FR); Coulon, Stéphane, 95810 Arronville (FR); Litteaut, Jacques, 78160 Marly le Roy (FR)
(74) Representative: Sayettat, Julien Christian

(57) **Abstract**

Process for an enhanced delivering of a telecommunication stream (3) from a telecommunication device (1) to a computer (5) through a network, wherein an enhancement option (2) can be activated by a user when the telecommunication stream (3) is received or sent out by the telecommunication device (1) and, if such an option is activated, a signalization of the telecommunication stream is sent to a server (4), said server (4) computing the enhancement capabilities applicable to the telecommunication stream (3), the enhancement capabilities automatically appearing on the screen of the computer (5) in order for the user to select at least one of said capabilities.

## Description

The invention relates to a process for an enhanced delivering of a telecommunication stream from a telecommunication device to a computer through a network, and a system for an enhanced delivering of a telecommunication stream from a telecommunication device to a computer through a network.

Programs enabling voice over Internet Protocol (VolP) telephone calls from computers have been recently developed and offer numerous functionalities such as call-conferences and video communications.

Telecommunication through a network, when activated by a user on its computer, works with a toolbar which can be masked to use the computer simultaneously for other tasks.

However, such telecommunication through the network has the inconvenient of notably having to be manually launched on the computer by the user and the toolbar might pop up on the screen when not required.

In parallel, classical telephone devices which also enable some functionality such as call-conferences have the inconvenient of having small graphical user interface. Consequently, not only do those devices have little functionality but they also do not enable to view all functionalities on their graphical user interface.

The purpose of the invention is to resolve the problem of the prior art by proposing, in particular, a process for an enhanced delivering of a telecommunication stream from a telecommunication device to a computer through a network.

For that purpose and according to a first aspect, the invention proposes a process for an enhanced delivering of a telecommunication stream from a telecommunication device to a computer through a network, wherein an enhancement option can be activated by a user when the telecommunication stream is received or sent out by the telecommunication device and, if such an option is activated, a signalization of the telecommunication stream is sent to a server, said server computing the enhancement capabilities applicable to the telecommunication stream, the enhancement capabilities automatically appearing on the screen of the computer in order for the user to select at least one of said capabilities.

According to a second aspect, the invention relates to a system for an enhanced delivering of a telecommunication stream from a telecommunication device to a computer through a network, said system comprising:
- a key in the telecommunication device to launch an enhancement option,
- a server computing enhancement capacities applicable to the telecommunication stream,
- a software element in the computer enabling the enhancement capabilities to appear automatically on the screen of the computer.

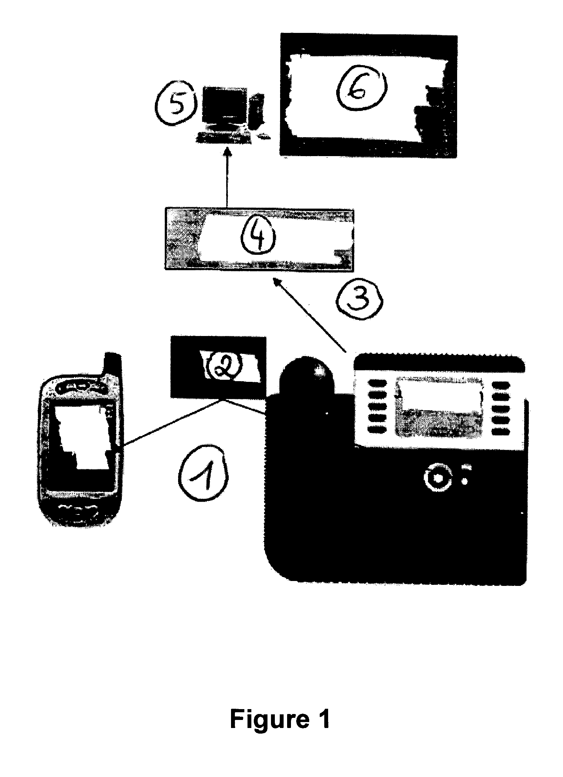

The invention will become apparent in the following description made with reference to the appended figure which represents an architecture of the system enabling to carry out the method according to an embodiment of the invention.

In the present invention, a telecommunication stream 3 is received or sent out by a telecommunication device 1, i.e. a standard telephone or a mobile telephone. The delivering is made through a network, traditionally an IP network.

After the telecommunication stream is received or when it is sent out, an enhancement option 2 can be activated by a user for an enhanced delivering of the telecommunication stream 3 from the telecommunication device 1 to a computer 5.

To do so, the enhancement option 2 is activated by the user by means of a key in the telecommunication device. Said key is one of the keys/buttons of the telecommunication device dedicated beforehand to launch the enhancement option.

The user can activate the enhancement option 2 when the telecommunication device 1 is idle or in-use, i.e. when receiving or sending an initial/first telecommunication stream initially or while another telecommunication stream is already in progress.

If such an option is activated, a signalization of the telecommunication stream 3 is sent to a server 4, said server computing the enhancement capabilities applicable to the telecommunication stream 3.

The signalization of the telecommunication stream 3 is materialized by a stream which can comprise:
- the capacities of the telecommunication stream 3 that is to be delivered from the telecommunication device 1 to the computer 5, as well as the state of the computer 5 (i.e. on or off, ...).
- a request of use of the process for enhanced delivering, as well as the identification of the computer 5 and of the telecommunication stream to be delivered to the computer 5. The server 4 can then send a request to the telecommunication device 1 in order to be informed of the capacities of the telecommunication stream 3 that is to be delivered to the computer 5, as well as the state of said computer.

Once that information concerning the capacities of the telecommunication stream and the state of the computer 5 is received by the server 4, said server computes the enhancement capabilities applicable to the telecommunication stream 3 according to the current status of the telecommunication device 1 and/or requested capabilities in the telecommunication stream 3.

The current status of the telecommunication device 1 is whether a telecommunication stream is already managed by the telecommunication device or not, i.e. whether the user already has a call in progress or not.

The requested capabilities in the telecommunication stream 3 notably concern the case in which the person that sends the telecommunication stream 3 to the telecommunication device 1, i.e. the person that calls the user, requests that certain capabilities be applicable to his call and therefore possibly chosen by the user. Those capabilities are then part of the telecommunication stream 3.

Additionally, the enhancement options 2 can be customized by the user. That way, the user can implement a customization by which, when the enhancement option is activated by means of the key, at least one option is automatically delivered to the computer 5 of the user.

After the computing, the server 4 notifies the computed enhancement capabilities to a software element of the computer 5 of the user, said notification automatically launching the software element.

Said software element is in charge of the telecommunication streams 3 delivered to the computer 5 of the user through the network.

The launching of the software element enables the enhancement capabilities to appear automatically on the screen of the computer in order for the user to select at least one of said capabilities.

The enhancement capabilities appear as a pop up menu 6 on the screen of the computer. The pop up menu 6 shows the interactions that are possible between the computer 5 and the telecommunication device 1 as regards the telecommunication stream 3.

The enhancement capabilities that the user can select and that enable such interactions are notably responding by voice, responding by text, ignoring the call or dispatching to attendant. The customized enhancement options also appear in the pop up menu 6.

The enhancement option selected in the pop up menu 6 directly interacts with the telecommunication stream 3 in the telecommunication device 1.

## Claims

1. Process for an enhanced delivering of a telecommunication stream (3) from a telecommunication device (1) to a computer (5) through a network, wherein an enhancement option (2) can be activated by a user when the telecommunication stream (3) is received or sent out by the telecommunication device (1) and, if such an option is activated, a signalization of the telecommunication stream is sent to a server (4), said server (4) computing the enhancement capabilities applicable to the telecommunication stream (3), the enhancement capabilities automatically appearing on the screen of the computer (5) in order for the user to select at least one of said capabilities.

2. Process according to claim 1, wherein the enhancement option (2) is activated by the user by means of a key in the telecommunication device (1).

3. Process according to claim 1 or 2, wherein the user can activate the enhancement option (2) when the telecommunication device (1) is idle or in-use.

4. Process according to any of claims 1 to 3, wherein the server (4) computes the enhancement capabilities applicable to the telecommunication stream (3) according to the current status of the telecommunication device (1) and/or requested capabilities implemented in the telecommunication stream (3).

5. Process according to any of claims 1 to 4, wherein the server (4) notifies the computed enhancement capabilities to a software element of the computer (5), said notification automatically launching the software element.

6. Process according to any of claims 1 to 5, wherein the enhancement capabilities appear as a pop up menu (6) on the screen of the computer (5) in order for the user to select at least one of said capabilities.

7. Process of any of claims 1 to 6, wherein the enhancement options (2) can be customized by the user.

8. System for an enhanced delivering of a telecommunication stream (3) from a telecommunication device (1) to a computer (5) through a network, said system comprising:
- a key in the telecommunication device to launch an enhancement option (2),
- a server (4) computing enhancement capacities applicable to the telecommunication stream (3),
- a software element in the computer (5) enabling the enhancement capabilities to appear automatically on the screen of the computer.
